## Europäisches Patentamt

## European Patent Office

## Office européen des brevets

(11) Veröffentlichungsnummer: **0 149 236**
**B1**

(12)
# EUROPÄISCHE PATENTSCHRIFT

(45) Veröffentlichungstag der Patentschrift:
**20.07.88**

(21) Anmeldenummer: **84116305.8**

(22) Anmeldetag: **27.12.84**

(51) Int. Cl.⁴: **C 08 G 18/40,** C 08 G 18/63, C 08 J 9/34, C 08 K 5/09, C 08 G 18/14, C 08 L 75/04 // (C08L75/04, 57:00)

(54) **Verfahren zur Herstellung von gegebenenfalls zellförmigen Formkörpern.**

(30) Priorität: **30.12.83 DE 3347573**

(43) Veröffentlichungstag der Anmeldung:
**24.07.85 Patentblatt 85/30**

(45) Bekanntmachung des Hinweises auf die Patenterteilung:
**20.07.88 Patentblatt 88/29**

(84) Benannte Vertragsstaaten:
**BE DE FR GB IT NL SE**

(56) Entgegenhaltungen:
**EP-A-0 102 007**
**DE-A-2 922 769**
**FR-A-1 457 606**
**FR-A-2 260 593**
**FR-B-2 027 596**
**GB-A-2 045 268**
**US-A-2 602 783**
**US-A-4 218 543**
**US-A-4 448 903**

(73) Patentinhaber: **BAYER AG, Konzernverwaltung RP Patentabteilung, D-5090 Leverkusen 1 Bayerwerk (DE)**

(72) Erfinder: **Ballé, Gerhard, Dr., Nietzsche- Strasse 14, D-5090 Leverkusen (DE)**
Erfinder: **Reiner, Paul, Dr., Oberhausener Strasse 155, D-4330 Mülheim/Ruhr (DE)**
Erfinder: **Rasshofer, Werner, Dr., Wolfskaul 10, D-5000 Köln 80 (DE)**

EP 0 149 236 B1

LIBER, STOCKHOLM 1988

**Beschreibung**

Die Erfindung betrifft ein Verfahren zur Herstellung von gegebenenfalls zellförmigen Formkörpern mit einer geschlossenen Außenhaut und einer verbesserten Oberflächenbeschaffenheit auf Polyurethan- und/oder Polyharnstoffbasis, gekennzeichnet durch Zusatz (zum Reaktionsgemisch vor der Umsetzung) von oberflächen verbessernden Zusatzmitteln, bestehend aus den Einzelkomponenten

1. einer durch radikalische Polymerisation oder Copolymerisation eines oder mehrerer olefinisch ungesättigter Monomerer in einer höhermolekularen Verbindung (Molekulargewicht 400 - 12 000), mit gegenüber Isocyanaten reaktiven H-Atomen, erhaltenen flüssigen und sedimentationsstabilen Polymerisatdispersion und

2. mindestens einem Salz einer Monocarbonsäure mit mindestens 8 Kohlenstoffatomen mit einem Metall der 1.-3. Hauptgruppe oder der 2. Nebengruppe des Periodensystems des Elemente.

Die Herstellung von Formkörpern mit einer geschlossenen Außenhaut und einem zelligen Kern nach dem Isocyanat-Polyadditionsverfahren ist grundsätzlich bekannt (vgl. z. B. Kunststoffe 60, Seiten 3-7 (1970) oder DE-B-1 196 864). Bei geeigneter Wahl der Ausgangskomponenten ist es bei diesem Verfahren möglich, sowohl elastische als auch starre Formkörper herzustellen. Falls bei dem Verfahren keine oder nur geringe Mengen an Treibmitteln mitverwendet werden, entstehen massive Formteile. Die Verarbeitung der Rohstoffe erfolgt vorzugsweise nach dem sogenannten Reaktionsspritzgußverfahren (RSG- oder RIM-Verfahren). Es handelt sich dabei um eine Fülltechnik, bei der die flüssigen Ausgangskomponenten über sogenannte zwangsgesteuerte Mischköpfe innerhalb kürzester Zeit in die jeweilige Form eingetragen werden. Bei der Herstellung von Formteilen für den Automobilbau werden hierbei beispielsweise di- und/oder trifunktionelle Polyetherpolyole, beispielsweise des Molekulargewichtsbereichs 3000 bis 7000, und niedermolekulare Diole wie Ethylenglykol und/oder Butandiol-1,4 bzw. aromatische Diamine mit sterisch gehinderten Aminogruppen, mit Polyisocyanaten, vorzugsweise flüssigen Polyisocyanaten bzw. Polyisocyanatgemischen der Diphenylmethanreihe, gegebenenfalls in Gegenwart von Treibmitteln, zur Reaktion gebracht (vgl. z. B. US-A-4 218 543 oder US-A-4 065 410). Die so hergestellten Formteile weisen ein ausgezeichnetes mechanisches Eigenschaftsniveau auf. Es hat sich jedoch gezeigt, daß die Formteile mitunter eine Oberfläche aufweisen, die nicht gänzlich frei von Vertiefungen und Poren ist. Solche Oberflächenstörungen lassen sich durch Einreiben des Formteils mit einem Farbpulver sichtbar machen und geben sich durch einen aufhellenden, lichtstreuenden Effekt gegenüber einer tiefschwarzen (Einfärbung mit Graphit), ungestörten Oberfläche zu erkennen. Darüber hinaus sind diese Oberflächenstörungen oft Ansatzpunkte für etwaige mechanisch bewirkte Beschädigungen.

Solche Oberflächenstörungen in Form von Poren oder Narben, sogenannten "pin holes" müssen oft mit einer Reparatur- oder Füllmasse gespachtelt und nachfolgend geschliffen, evtl. vorher und nachher entfettet, sowie gegebenenfalls lackiert werden und erfordern somit zu ihrer Beseitigung einen hohen Aufwand.

Es war daher die der Erfindung zugrundeliegende Aufgabe, ein Verfahren bereitzustellen, das die Herstellung von Polyurethanformkörpern ohne derartige Oberflächendefekte erlaubt.

Diese Aufgabe konnte mit dem nachstehend näher beschriebenen erfindungsgemäßen Verfahren gelöst werden.

Gegenstand der Erfindung ist ein Verfahren zur Herstellung von gegebenenfalls zellförmigen Formkörpern auf Polyurethan- und/oder Polyharnstoff-Basis mit einer geschlossenen Oberfläche durch Umsetzung in einer geschlossenen Form eines Reaktionsgemisches aus

a) mindestens einem organischen Polyisocyanat,

b) mindestens einer Verbindung mit einem Molekulargewicht zwischen 400 und 12000, welche mindestens zwei gegenüber Isocyanatgruppen reaktionsfähige Gruppen aufweist und die frei von durch radikalische Polymerisation hergestellten Polymerisaten und Copolymerisaten ist,

c) gegebenenfalls mindestens einer Verbindung mit einem Molekulargewicht zwischen 32 und 399 mit mindestens zwei gegenüber Isocyanatgruppen reaktionsfähigen Gruppen, und

d) gegebenenfalls den in der Polyurethanchemie an sich bekannten Hilfs- und Zusatzstoffen,

dadurch gekennzeichnet, daß man dem Reaktionsgemisch vor der Umsetzung oberflächenverbessernde Zusatzmittel

e) bestehend aus

e1) einer flüssigen und sedimentationsstabilen Polymerdispersion, die durch radikalische Polymerisation oder Copolymerisation von $C_1$-$C_{18}$-Alkylestern der Acrylsäure und/oder Methacrylsäure in Kombination mit bis zu 50 Gew.-%, bezogen auf das gesamte Monomergemisch, eines oder mehrerer olefinisch ungesättigter Monomerer in einer Verbindung entsprechend den Komponenten b) erhalten wird, und

e2) mindestens einem Salz eine Metalls der 1.-3. Hauptgruppe oder der 2. Nebengruppe des Periodensystems der Elemente und einer Monocarbonsäure mit mindestens 8 C-Atomen im Molekül einverleibt,

wobei die Zusatzmittel e) in solchen Mengen eingesetzt werden, daß pro 100 Gew.-Teile der Komponenten b) 0,01 bis 1,5 Gew.-Teile an Polymerisatfeststoff der Polymerisatdispersion e1) und 0,01 bis 2 Gew.-Teile an Metallsalzen e2) enthalten sind.

Die Verwendung von gegenüber Isocyanatgruppen inerten Polymerisaten bzw. Copolymerisaten bei der Herstellung von Polyurethanschaumstoffen ist im Prinzip bereits bekannt (GB-A-1 048 852 bzw. US-A-3 085 983). Bei den vorbekannten Verfahren werden die Polymerisate bzw. Copolymerisate als Schaumstabilisatoren bzw.

Zellregler mitverwendet. Es ist außerdem bekannt (DE-A-2 922 769, FR-A-1 457 606, FR-A- 2 027 596 und FR-A-2 260 593) verschiedene mit ungesättigten Monomeren aufgepfropfte Polyetherpolyole zur Herstelllung von Polyurethanschäumen zu verwenden. Der erfindungsgemäß aufgefundene Effekt, daß derartige Polymerisate bzw. Copolymerisate in sehr geringen Mengen in Kombination mit den nachstehend näher beschriebenen Metallcarboxylaten bei der Herstellung von Polyurethanformteilen mit einer geschlossenen Oberflächenschicht zelldestabilisierend wirken, d. h. zu einem Kollaps der Zellen an der Oberfläche und so zu einer glatteren und störungsfreien Oberfläche führen, muß im Licht der zitierten Vorveröffentlichungen als äußerst überraschend angesehen werden.

Die Form der flüssigen, lagerstabilen und gut förderund dosierbaren Dispersion der Polymerisats e1) in einem Polyetherpolyol b), in den diese Polymerisate im Rahmen der vorliegenden Erfindung hergestellt werden, macht sie besonders geeignet sowohl für den Einsatz in kleinerem Maßstab (Einmischen in die Polyolkomponente per Hand oder mit einfachen Mischvorrichtungen) als auch für maschinelle Verarbeitung (gesonderte Eindosierung in den Mischkopf oder kontinuierlich über ein in line-Mischaggregat in die Polyolkomponente).

Beim erfindungsgemäßen Verfahren kommen als Ausgangskomponente a) beliebige aliphatische, cycloaliphatische, araliphatische, aromatische oder heterocyclische Polyisocyanate in Betracht. Geeignete Polyisocyanate sind beispielsweise die in US-A-4 065 410, Kolonne 2, Zeile 29 bis Kolonne 3, Zeile 22 beispielhaft genannten Verbindungen. Zu den bevorzugten Ausgangsmateralien a) gehören die bei Raumtemperatur flüssigen Derivate des 4,4'-Diisocyanatodiphenylmethans, beispielsweise die Urethangruppen aufweisenden Polyisocyanate, die gemäß DE-B-1 618 380 (US-A-3 644 457) durch Umsetzung von 1 Mol 4,4'-Diisocyanatodiphenylmethan mit 0,05 bis 0,3 Molen an niedermolekularen Diolen oder Triolen, vorzugsweise Polypropylenglykolen mit einem unter 700 liegenden Molekulargewicht, zugänglich sind, oder Carbodiimid- und/oder Uretonimingruppen aufweisende Diisocyanate auf Basis von 4,4'-Diisocyanatodiphenylmethan, wie sie beispielsweise gemäß US-A-3 152 162, US-A-3 384 653, US-A-3 449 256, US-A-4 154 752 oder DE-A-2 537 685 zugänglich sind. Auch die entsprechenden Modifizierungsprodukte auf Basis von Gemischen aus 2,4'- und 4,4'-Diisocyanatodiphenylmethan oder auch Gemische der wie beschrieben modifizierten 4,4'-Diisocyanatodiphenylmethane mit untergeordneten Mengen an höher als difunktionellen Polyisocyanaten der Diphenylmethanreihe, beispielsweise solchen der in DE-A-2 624 526 beschriebenen Art, gehören zu den bevorzugten Polyisocyanaten. Im allgemeinem handelt es sich bei den bevorzugten, erfindungsgemäß einzusetzenden Polyisocyanaten um bei Raumtemperatur flüssige, gegebenenfalls wie beschrieben chemisch modifizierte Polyisocyanate bzw. Polyisocyanatgemische der Diphenylmethanreihe einer (mittleren) NCO-Funktionalität von 2-2,2, insbesondere von 2, in denen als Hauptkomponente (mehr als 50 Gew.-%) 4,4'-Diisocyanatodiphenylmethan vorliegt.

Bei der Ausgangskomponente b) handelt es sich um mindestens eine Verbindung mit mindestens zwei gegenüber Isocyanatgruppen reaktionsfähigen Wasserstoffatomen und einem, aus der Funktionalität und dem Gehalt an gegenüber Isocyanatgruppen reaktionsfähigen Gruppen berechenbaren (durchschnittlichen) Molekulargewicht von 400 bis 12 000, vorzugsweise 1000 bis 7000 und insbesondere 2000 bis 6000. Besonders bevorzugt werden als Ausgangskomponente b) di- und/oder trifunktionelle Polyetherpolyole eingesetzt. Diese Polyetherpolyole werden in bekannter Weise beispielsweise durch Polymerisation von Tetrahydrofuran oder Epoxiden wie Ethylenoxid, Propylenoxid, Butylenoxid, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z. B. in DE-B-1 176 358 und 1 064 938 beschrieben werden, sowie auf Formit oder Formose gestartete Polyether (DE-A-2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Als Ausgangskomponente b) kommen auch die sogenannten Aminopolyether oder Aminohydroxpolyether des obengenannten Molekulargewichtsbereichs in Betracht, deren endständige, gegenüber Isocyanatgruppen reaktionsfähige Gruppen zumindest zu 25, vorzugsweise zu 50, und insbesondere zu 80-100 Äquivalentprozent aus primären und/oder sekundären, aromatisch oder aliphatisch gebundenen Aminogruppen und zum Rest aus primären und/oder sekundären, aliphatisch gebundenen Hydroxylgruppen bestehen.

In diesen Verbindungen können die die Aminogruppen tragenden, endständigen Reste mit der Polyetherkette auch über Urethan- oder Estergruppen verknüpft sein. Die Herstellung dieser "Aminopolyether" erfolgt in an sich bekannter Weise. So kann beispielsweise eine Aminierung von Polyhydroxypolyethern wie z. B. Polypropylenglykolethern durch Reaktion mit Ammoniak in Gegenwart von Raney-Nickel und Wasserstoff durchgeführt werden (BE-A-634 741). US-A-3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-B-1 193 671 wird die Herstellung von Polyethern mit Amino-Endgruppen durch Hydrierung von cyanethylierten Polyoxypropylenethern beschrieben. Weitere Methoden zur Herstellung von Polyoxyalkylen-(Polyether)-aminen sind in US-A-3 155 728, US-A-3 236 895 und FR-A-1 551 605 beschrieben. In der FR-A-1 466 708 wird beispielsweise die Herstellung von sekundäre Amino-Endgruppen aufweisenden Polyethern beschrieben.

Höhermolekulare Polyhydroxypolyether können durch Reaktion mit Isatosäureanhydrid in die entsprechenden, erfindungsgemäß als Komponente b) geeigneten Anthranilsäureester überführt werden, wie dies beispielsweise in DE-A-2 019 432, DE-A-2 619 840, US-A-3 808 250, US-A-3 975 428 oder US-A-4 016 143 beschrieben ist. Auf diese Weise entstehen Polyether mit endständigen aromatischen Aminogruppen.

Durch Umsetzung von NCO-Präpolymeren auf Basis von Polyhydroxypolyethern mit Hydroxylgruppen aufweisenden Enaminen, Aldiminen oder Ketiminen und anschließende Hydrolyse erhält man gemäß DE-A-2 546 536 bzw. US-A-3 865 791 höhermolekulare, endständige Aminogruppen aufweisende Verbindungen.

Ebenfalls einsetzbar sind andere Amino-Polyether des obengenannten Molekulargewichtsbereichs, wie sie beispielsweise gemäß DE-A-2 948 419 oder gemäß DE-A-3 039 600 erhalten werden können.

Selbstverständlich können als erfindungsgemäße Ausgangskomponente b) auch beliebige Gemische der beispielhaft genannten Verbindungen mit gegenüber Isocyanatgruppen reaktionsfähigen Gruppen eingesetzt werden.

Die erfindungsgemäß als Ausgangskomponente b) in Betracht kommenden Verbindungen mit gegenüber Isocyanatgruppen reaktionsfähigen Gruppen sind nicht auf die oben beispielhaft erwähnten Verbindungen begrenzt.

So können beispielsweise beim erfindungsgemäßen Verfahren alle in der US-A-4 218 543 beispielhaft beschriebenen Verbindungen mit gegenüber Isocyanatgruppen reaktionsfähigen Gruppen des Molekulargewichtsbereichs 400 bis 12 000 eingesetzt werden die frei von durch radikalische Polymerisation hergestellten Polymerisaten und Copolymerisaten sind.

Bei den gegebenenfalls mitzuverwendenden Ausgangsverbindungen c) handelt es sich um beliebige, mindestens zwei primäre bzw. sekundäre Aminogruppen und/oder Hydroxylgruppen aufweisende Kettenverlängerungsmittel bzw. Vernetzungsmittel des Molekulargewichtsbereichs 32 (Hydrazin) bis 399. Vorzugsweise werden die entsprechenden difunktionellen Verbindungen eingesetzt.

Als Beispiele für derartige Verbindungen seien genannt: Hydrazin, Ethylendiamin, Hexamethylendiamin, 1-Amino-3,3,5-trimethyl-5-aminomethyl-cyclohexan (IPDA), N,N'-Dimethylhydrazin, Ethylenglykol, Propylenglykol-(1,2) und -(1,3), 1,4-Dihydroxybutan, 1,6-Dihydroxyhexan, Glycerin, Trimethylolpropan, Pentaerythrit, Chinit, Mannit, Diethylenglykol, Triethylenglykol, Tetraethylenglykol, Dipropylenglykol, Tripropylenglykol, Dibutylenglykol, Diethanolamin, Diisopropanolamin, 1,4-Diaminobenzol, 2,4-Diaminotoluol oder 4,4'-Diaminodiphenylmethan.

Zu den bevorzugten, beim erfindungsgemäßen Verfahren als Komponente c) einzusetzenden Verbindungen gehören diprimäre aromatische Diamine, deren Molekulargewicht innerhalb des obengenannten Bereichs liegt, und besonders solchen, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen, aufweisen, besonders bevorzugt im solchen, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele für solche bevorzugten bzw. besonders bevorzugten Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl-4,4'-diaminodiphenylmethan.

Zu den bevorzugten erfindungsgemäß als Komponente c) einzusetzenden Verbindungen gehören außerdem aliphatische Diole des Molekulargewichtsberichs 62 bis 200 wie z. B. Ethylenglykol, 1,2-Dihydroxypropan und 1,4-Dihydroxybutan. Beliebige Gemische alkoholischer und/oder aminischer Aufbaukomponenten c) können selbstverständlich ebenfalls eingesetzt werden.

Die Aufbaukomponente c) kommt beim erfindungsgemäßen Verfahren in Mengen von 0 bis 50, vorzugsweise von 10 bis 40 Gew.-%, bezogen auf Komponente b) zum Einsatz.

Beim erfindungsgemäßen Verfahren können als weitere Komponenten d) die aus der Polyurethanchemie an sich bekannten Hilfs- und Zusatzmittel mitverwendet werden. Hierzu gehören beispielsweise

1. Treibmittel wie z. B.: Aceton, Ethylacetat und insbesondere halogensubstituierte Alkane wie Dichlormethan, Trichlormethan, Monofluortrichlormethan, Chlordifluormethan oder Dichlordifluormethan. Die Mitverwendung von Wasser ist prinzipiell möglich, jedoch weniger bevorzugt.

2. Katalysatoren für die Isocyanat-Polyadditions-Reaktion der an sich bekannten Art, wie sie beispielsweise in US-A-4 065 410, Kolonne 5, Zeile 59 bis Kolonne 6, Zeile 30 beschrieben sind.

3. Oberflächenaktive Additive und sonstige Zusatzstoffe, wie sie beispielsweise in US-A-4 065 410, Kolonne 6, Zeile 34 bis Kolonne 7, Zeile 2 beschrieben sind.

4. Innere Formtrennmittel, wie sie beispielsweise in US-A-3 726 952, GB-A-1 365 215, US-A-4 098 731, US-A-4 058 492, US-A-4 033 912, US-A-4 024 090, US-A-4 098 731, US-A-4 374 222 und/oder US-A-4 111 861 beschrieben sind.

Weitere Beispiele von gegebenenfalls erfindungsgemäß mitzuverwendenden Hilfs- und Zusatzmitteln, d. h. von oberflächenaktiven Zusatzstoffen und Schaumstabilisatoren, flammhemmenden Substanzen, Weichmachern, Farbstoffen und Füllstoffen, fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113, beschrieben.

4

Erfindungswesentliches Merkmal ist die Mitverwendung der oberflächenverbessernden Zusatzmittel e1) in Abmischung mit e2).

Bei der Komponente e1) handelt es sich um flüssige, leicht gießbare und während der Lagerung sedimentationsstabile Polymerisatdispersionen, welche dadurch erhalten werden, daß man $C_{1-18}$-Alkylester der Acrylsäure und/oder Methacrylsäure, die in Kombination mit bis zu 50 Gew.-%, bezogen auf gesamtes Monomergemisch, eines oder mehrer, weiterer Monomerer verwendet werden können, auf radikalischem Wege in einer als Komponente b) beschriebenen höhermolekularen Verbindung mit einem Molekulargewicht von 400 - 12 000 und mindestens zwei gegenüber Isocyanat reaktiven Gruppen im Molekül polymerisiert.

Bevorzugte Acryl- oder Methacrylsäureester sind solche mit bis zu 10 C-Atomen im Alkylrest. Beispiele für verwendete Acryl- oder Methacrylsäureester sind Acrylsäure-methylester, Acrylsäure-ethylester, Acrylsäure-n-butylester, Acrylsäure-n-pentylester, Acrylsäure- n-hexylester, Acrylsäure-2-ethylhexylester, Acrylsäuredecylester, Acrylsäuredodecylester, Acrylsäureoctadecylester bzw. die entsprechenden Methacrylsäureester. Beispiele für sonstige Monomere sind beliebige olefinisch ungesättigte, gegenüber Isocyanatgruppen inerte Verbindungen wie z. B. Ethylen, Propylen, Styrol, Itaconsäureester, Vinylacetat, Diallylphthalat, Acrylnitril oder Methacrylnitril.

Als hochmolekulare Verbindung mit mindestens 2 gegenüber Isocyanat reaktiven Endgruppen im Molekül kommen grundsätzlich die weiter oben als Komponente b) beschriebenen Verbindungen in Betracht, wobei bevorzugt Polyetherpolyole der Funktionalität 2 und/oder 3 gelten. Zweckmäßig verwendet man als Medium für die Polymerisation das gleiche oder ein ähnliches Polyetherpolyol, wie es sowie so schon als Komponente b) im Reaktionsgemisch enthalten sein wird.

Die Polymerisation wird so durchgeführt, daß das Polyetherpolyol b) unter Stickstoff auf die Polymerisationstemperatur von 40°-180°C, vorzugsweise 40°-120°C und besonders bevorzugt 40°-100°C, erhitzt wird und man unter Rühren das oder die Monomeren zusammen mit dem radikalischen polymerisationsinitiator so zudosiert, daß die gewählte Temperatur durch Kühl- oder Heizvorrichtungen bequem eingehalten werden kann. Man kann auch lediglich einen Teil des Polyetherpolyols vorlegen und den Rest als Abmischung mit dem oder den Monomeren zudosieren. Schließlich ist es möglich, untergeordnete Mengen eines Lösungsmittels mitzuverwenden, welches nach beendeter polymerisation destillativ entfernt wird, ebenso wie etwa noch vorhandene, nicht umgesetzte Reste des bzw. der Monomeren.

Als Lösungsmittel eignen sich z. B. Methylenchlorid, Ethanol, iso-Propanol, n-Propanol, n-Butanol, iso-Butanol, tert.-Butanol, Essigsäuremethyl-bis -butylester, Aceton, Methylethylketon, Benzol und Toluol.

Bevorzugt wird die Durchführung ohne Zusatz von Lösungsmitteln, außer daß zum Ausdestillieren der Restmonomeren gegebenenfalls ein höhersiedendes Lösungsmittel als Schleppmittel zugegeben werden kann.

Als Initiatoren können beispielsweise Percarbonate, Perester, wie tert.-Butylperpivalat, -peroctoat, Benzoylperoxid, o-Methoxybenzoylperoxid, Dichlorbenzoylperoxid oder Azoverbindungen wie Azoisobuttersäurenitril, (AIBN) in Mengen von 0,1 bis 3 Gew.-% bezogen auf Monomere, eingesetzt werden. Vorzugsweise wird die Initiatormenge auf maximal 1,5 Gew.-%, bezogen auf Monomere, begrenzt. Dabei können auch Kombinationen mehrerer Initiatoren mit unterschiedlicher Aktivität, etwa zur Kombination von schnellem Start der Polymerisation mit langanhaltendem Radikalangebot zur möglichst vollständigen Auspolymerisation der Monomeren, angewandt werden.

Das Mengenverhältnis zwischen Monomeranteil und Polyetherpolyolen wird zweckmäßig so gewählt, daß ein Polymerisatgehalt von 5-50 Gew.-%, vorzugsweise 10-30 Gew.-% im Zusatzmittel e1) resultiert.

Die Anwendung der entstehenden Dispersionen hat verschiedene Vorteile, etwa gegenüber der Anwendung der auf andere Weise erhaltenen Polymerisate in Substanz oder in Lösung. Die durch Lösungs-, Emulsions- oder Massepolymerisation erhaltenen Polymerisate aus höheren Acryl- oder Methacrylsäureestern und gegebenenfalls anderen Monomeren sind im allgemeinen von so hohem Molekulargewicht, daß sie zwar noch flüssig sein mögen, wegen ihrer hohen Viskosität jedoch nicht mehr durch Pumpen und Leitungen förderbar sind und sich nur schwierig homogen in das Reaktionsgemisch bzw. eine seiner Komponenten einmischen lassen. Erschwert wird die Vermischung auch noch durch den Umstand, daß die Einsatzmengen, verglichen mit den Hauptkomponenten des Reaktionssystems, relativ gering sind. Dieser Umstand kann zu Dosierfehlern und Inhomogenitäten in der Formulierung führen.

Man könnte daran denken, solche Polymere mit einem organischen Lösungsmittel zu verdünnen, um so die Mischbarkeit, Dosiergenauigkeit und Förderfähigkeit zu verbessern. Dies brächte die Notwendigkeit mit sich, das Lösungsmittel nach Einbringen der Lösung in das Reaktionssystem wieder zu entfernen, was einen zusätzlichen Arbeitsgang bedeutet, es sei denn, das Lösungsmittel kann im Reaktionsgemisch eine weitere Funktion übernehmen, z. B. die eines Treibmittels. In diesem Falle sind die zulässigen Lösungsmittelmengen aber durch die Rezepturgestaltung begrenzt, so daß die erwünschte Lösungsviskosität unter Umständen nicht erreicht wird.

Bei der Herstellung von nur wenig angeschäumten bzw. gar massiven Formteilen nach dem Reaktionsspritzgußverfahren kann die Anwesenheit auch geringer Mengen flüchtiger Lösungsmittel sogar unerwünscht sein.

Demgegenüber können die gemäß vorliegender Erfindung verwendeten Polymerisationsdispersionen e1) wegen ihrer relativ niedrigen Viskosität leicht und mit größter Dosiergenauigkeit in das Reaktionsgemisch eingebracht und homogen vermischt werden. Sie können lösungsmittelfrei hergestellt und gehandhabt werden, so daß ein zusätzlicher Destillationsschritt entfällt bzw. der Verarbeiter in der Freiheit der Rezepturgestaltung nicht beeinträchtig wird.

Die gedanklich naheliegende Möglichkeit, das Polymerisat als solches oder aus seiner Lösung in einem flüchtigen organischem Lösungsmittel heraus in eine Dispersion im ausgewählten Polyetherpolyol zu überführen (gegebenenfalls unter Abdestillieren des Lösungsmittels) scheitert daran, daß so hergestellte Polymerisatdispersionen zum Unterschied von den in der vorliegenden Erfindung verwendeten Dispersionen nicht lager- und sedimentationsstabil sind, sondern sich wegen der starken Unverträglichkeit zwischen Acrylpolymeren und Polyetherpolyolen in kurzer Zeit entmischen. Die dabei ausfallende Polymerisatphase läßt sich auch mit üblichen mechanischen Hilfsmitteln nicht redispergieren. Dies kann schon nach kurzer Lagerzeit (wenige Tage) zu schwerem Dosierfehlern und erhöhtem Ausschuß bei der Verarbeitung führen.

Bei der Komponente e2) handelt es sich um Metallsalze einer Monocarbonsäure mit insgesamt mindestens 8, vorzugsweise 8 bis 18 Kohlenstoffatomen. Bei den Carbonsäuren handelt es sich vorzugsweise um gegebenenfalls olefinisch ungesättigte aliphatische oder cycloaliphatische Carbonsäuren wie z. B. Octancarbonsäure, Dodecancarbonsäure, Stearinsäure, Ölsäure, Linolsäure, Linolensäure, Tallölsäure, Arachidonsäure, Myristinsäure, Palmitinsäure, Margrinsäure, Arachinsäure, Cerotinsäure, Melissinsäure, Erucasäure, dimere Fettsäuren Abietinsäure oder Naphthensäuren. Bei den den Salzen zugrundeliegenden Metallen handelt es sich um Metalle der ersten bis dritten Hauptgruppe bzw. der zweiten Nebengruppe des Periodensystems der Elemente.

Bei den Zusatzmitteln e2) handelt es sich somit um Salze beispielsweise der Alkalimetalle, insbesondere von Natrium oder Kalium, der Erdalkalimetalle, insbesondere des Magnesiums oder des Calciums, um Salze des Aluminiums oder um Salze des Zinks. Die Zinksalze sind besonders bevorzugt.

Die Komponente e2) wird beim erfindungsgemäßen Verfahren im allgemeinen in einer Menge von 0,01 bis 2, vorzugsweise 0,05 bis 1 Gewichtsteilen, bezogen auf 100 Teile der Komponenten b) eingesetzt.

Bei der Durchführung des erfindungsgemäßen Verfahrens kommen die Reaktionspartner im übrigen in Mengen zum Einsatz, die einer NCO-Kennzahl von 70 bis 130, vorzugsweise 90 bis 110, entsprechend. Unter NCO-Kennzahl versteht man hierbei den Quotienten aus Anzahl der Isocyanatgruppen und Anzahl der gegenüber Isocyanaten reaktiven Gruppen, multipliziert mit 100. In die Berechnung der Isocyanat-Kennzahl gehen hierbei die gegebenenfalls in den Trennmitteln vorliegenden, gegenüber Isocyanatgruppen reaktionsfähigen Gruppen (Carboxylgruppen) nicht ein. Bei der Durchführung des erfindungsgemäßen Verfahrens wird vorzugsweise nach der bekannten Reaktionsspritzgußtechnik (RSG-Verfahren) gearbeitet. Hierbei kommen im allgemeinen zwei Reaktionskomponenten zum Einsatz, wobei die Polyisocyanatkomponente a) die erste und die gegenüber Isocyanaten reaktive Komponente, die sogenannte "NCO-reaktive Komponente", d. h. das Gemisch der Komponenten b) und c), die zweite Reaktionskomponente darstellen. Die gegebenenfalls mitzuverwendenden Komponenten d) und die Komponente e) werden im allgemeinen der "NCO-reaktiven-Komponente" zugemischt, jedoch kann es auch zweckmäßig sein, beispielsweise bei der Verwendung von Isocyanatgruppen aufweisenden Trennmitteln, diese vor der Durchführung des erfindungsgemäßen Verfahrens der Polyisocyanatkomponente a) einzuverleiben. Grundsätzlich ist es selbstverständlich auch möglich, solche Mischköpfe zu verwenden, die den Einsatz von drei oder vier getrennten Komponenten bei der Durchführung des erfindungsgemäßen Verfahrens gestatten, so daß eine Vormischung der Einzelkomponenten nicht erforderlich ist. Gerade für diesen Fall ist es von Vorteil, wenn das Zusatzmittel in Form einer niedrigviskosen Dispersion eingesetzt werden kann, die pumpfähig ist und mit größerer Genauigkeit dosiert werden kann. Das als Dispergiermedium anwesende Polyetherpolyol b) kann bei der Berechnung der erforderlichen Mengen an Komponente b) berücksichtigt werden, da das Polyetherpolyol als Dispergermiedium der Komponente b) entspricht oder mindestens ähnlich ist.

Die Menge des in die Form eingebrachten Gemischs wird so bemessen, daß die Formkörper eine Dichte von 0,1-1,4 g/cm$^3$, vorzugsweise von 0,2 - 1,3 g/cm$^3$ aufweisen. Insbesondere bei der Mitverwendung von mineralischen Füllstoffen können Formkörper mit einer über 1,2 g/cm$^3$ liegenden Dichte resultieren. Die Formkörper können oft schon noch einer Formstandzeit von 5 bis 90, vorzugsweise 20 bis 60, Sekunden entformt werden.

Als Ausgangstemperatur des in die Form eingebrachten Gemisches wird im allgemeinen eine Temperatur zwischen 10 und 60°C, vorzugsweise 20 bis 50°C, gewählt. Die Temperatur der Form beträgt im allgemeinen 40 bis 100°C, vorzugsweise 50 bis 70°C.

Grundsätzlich ist es auch möglich, bei der Durchführung des erfindungsgemäßen Verfahrens aus der Komponente a) und zumindest einem Teil der Komponente b) und/oder c) ein NCO-Präpolymer herzustellen und dieses in einer zweiten Reaktionsstufe mit der restlichen Menge der Komponenten b) bzw. c) zur Umsetzung zu bringen. Eine derartige zweistufige Arbeitsweise ist jedoch weniger bevorzugt.

Die nach dem erfindungsgemäßen Verfahren hergestellten Formkörper zeichnen sich durch eine verbesserte, d. h. homogenere Oberflächenbeschaffenheit im Vergleich zu entsprechenden Formkörpern, die ohne Mitverwendung der Komponente e) hergestellt worden sind, aus. Die nach dem erfindungsgemäßen Verfahren erhältlichen Formkörper eignen sich insbesondere zur Herstellung von flexiblen Automobilstoßstangen bzw. Karosserieelementen und für den Innenausbau von Automobilen, wie z. B. Konsolen, Seitenverkleidungen oder Armaturenbrettern, ferner zur Herstellung von Fahrrad- oder Motorradsätteln. Durch geeignete Variation der Ausgangskomponenten a) bis d), insbesondere bei relativ geringem Anteil an aminischen Aufbaukomponenten, können auch z. B. flexible Schuhsohlen mit gutem Abriebverhalten und ausgezeichneter mechanischer Festigkeit erhalten werden.

In den nachfolgenden Beispielen beziehen sich alle Prozentangaben auf Gewichtsprozente und alle Angaben in "Teilen" auf Gewichtsteile.

In den nachfolgenden Beispielen kommen folgende Materialien zur Verwendung:

Polyol A: Polyethertriol, dargestellt durch Propoxylierung und anschließende Ethoxylierung von Trimethylolpropen, OH-Zahl 27

Polyol B: Wie A, OH-Zahl 35

Polyol C: Wie A, OH-Zahl 28

Polyol D: Polyetherdiol, dargestellt durch Propoxylierung und anschließende Ethoxylierung von Propylenglykol, OH-Zahl 28

EA = Ethylacrylat
BA = n-Butylacrylat
EHA = 2-Ethylhexylacrylat
DMA = Decylmethacrylat
TBPO = tert.-Butylperoctoat
TBPP = tert.-Butylperpivalat

Die Ansätze für die Herstellung der als Zusatzmittel e1) dienenden Polymerisatdispersionen sind in der nachfolgenden Tabelle zusammengestellt. Gearbeitet wurde nach folgender Methode:

200 g der als Reaktionsmedium verwendeten Polyetherpolyols werden in einem Planschliffrührbecher mit Rührer, Tropftrichter, Rückflußkühler mit Blasenzähler und Gaseinleitungsrohr unter Stickstoff auf die Polymerisationstemperatur erwärmt, dann wird im Laufe von 1 Std. eine Mischung aus 600 g Polyol A und 200 g des oder der Monomeren sowie dem Polymerisationsinitiator eindosiert und nach erfolgter Zugabe noch 2 Std. lang bei der gleichen Temperatur nachgerührt. Spuren nicht umgesetzter Monomerer können im Vakuum abdestilliert werden. Es resultieren mehr oder weniger translucente farblose Dispersionen mit leicht gießbarer Konsistenz. Eine Sedimentation bzw. ein Aufrahmen des polymeren Farbstoffs wird auch bei längerer Lagerung nicht beobachtet.

| Polymerisatdispersion | 1 | 2 | 3 | 4 | 5 | 6 | 7 |
|---|---|---|---|---|---|---|---|
| Polyol A (g) | 800 | 800 | 800 | 800 | 750 | 750 | 700 |
| EA (g) | 100 | 200 | 75 | 100 | 62,5 | 125 | 75 |
| BA (g) | - | - | 125 | - | - | - | 225 |
| EHA (g) | 100 | - | - | - | 187,5 | 125 | - |
| DMA (g) | - | - | - | 100 | - | - | - |
| TBPO (g) | 1 | - | 2 | 1 | 1,25 | 1,25 | - |
| TBPP (g) | 1 | - | - | 1 | 1,25 | 1,25 | - |
| AIBN (g) | - | 1 | - | - | - | - | 3 |
| Polimerisationstemperatur (°C) | 60 | 120 | 80 | 80 | 60 | 60 | 120 |
| Viskosität (mPa.s) | 2600 | 1200 | 1800 | 1900 | 2200 | 1900 | 1400 |
| Monomerumsatz (gaschromatographisch) (%) | 99,2 | 98,7 | 99,0 | 98,2 | 99,0 | 98,2 | 98,5 |

**Beispiel 1**

90 Gew.-Tle. Polyol A, 17 Gew.-Tle. Ethylenglykol, 5 Gew.-Tle. einer Rußpaste (20 Gew.-% Ruß in 80 Gew.-% Polyol B), 0,4 Gew.-Tle. Triethylendiamin, 0,04 Gew.-Tle. Dibutylzinndilaurat und 1 Gew.-Tl. Zinkstearat werden mit jeweils 2,5 Gew.-Tln. Polymerisatdispersion 1-7 und je 10 Gew.-Tln. Trichlorfluormethan zu Polyolformulierung vermischt, wobei das in den Dispersionen anwesende Polyol bei der Berechnung von Polyol A berücksichtigt wird. 100 Gew.-Tle. der Formulierung werden in einem Wachsbecher mit 99 Gew.-Tln. einer Isocyanatkomponente mit einem NCO-Gehalt von 23 Gew.-% (hergestellt durch Umsetzung eines Überschusses 4,4'-Diisocyanatodiphenyl-methan mit Tripropylenglykol) schnell verrührt. Der aufsteigende Schaum zeigt eine deutliche Neigung zum Kollabieren, d. h. er fließt an der Außenwand des Bechers mehr oder weniger stark herab, bevor er erhärtet. Ein vergleichsschaum ohne Zusatz der erfindungsgemäßen Dispersionen zeigt diesen Effekt nicht, er erhärtet zu einem regelmäßig geformten Schaumpilz. Die Poren der hergestellten Schäume zeigen sich nach dem Aufschneiden gegenüber dem O-Schaum deutlich vergrößert. Diese Vorprüfung zeigt, daß die untersuchten Dispersionen bei der Formverschäumung durch ihre kollapsfördernde Wirksamkeit als Oberflächenverbesserer wirksam sein werden.

Je 240 ml der durch Vereinigung von Polyol- und Polyisocyanatkomponente im gleichen Mengenverhältnis erhaltenen, die Zusatzmittel 1-7 enthaltenden Reaktionsmischungen wurden 10 Sekunden lang gerührt und in eine auf 60°C temperierte verschließbare Aluminiumform für eine 20 x 20 x 1 cm große Platte gefüllt, deren Innenfläche mit einem wachshaltigen handelsüblichen Trennmittel (P 180 der Firma Acmos) beschichtet wurde. Nach 5 Minuten wurden den Formen Platten mit tiefschwarzer kompakter fehlerfreier Oberflächenschicht entnommen. Ein Vergleichsversuch ohne Zusatz einer Polymerisatdispersion und Zinkstearat lieferte eine Platte mit unregelmäßiger matter Oberfläche und wesentlich dünnerer Oberflächenzone.

7

**Beispiel 2**

70 Gew.-Tle. Polyol D, 20 Gew.-Tle. Polyol B, 1 Gew.-Tl. Ethylenglykol, 14 Gew.-Tle. 1,4-Butandiol, 0,3 Gew.-Tle. Trethylendiamin, 0,2 Gew.-Tle. Dibutylzinndilaurat und 0,75 Gew.-Tle. Zinkstearat werden mit jeweils 5 Gew.-Tln. der Polymerisatemulsionen 1-7 und je 8 Gew.-Tln. Trichlorfluormethan zu Polyolkomponenten vereinigt. Je 115 Gew.-Tle. dieser Formulierungen werden mit je 74 Gew.-Tln. des in Beispiel 1 beschriebenen Polyisocyanats unter den gleichen Bedingungen zu Platten verarbeitet. Die fertigen Platten besitzen eine einwandfreie Oberfläche mit kompakter dicker Randzone.

**Beispiel 3**

90 Gew.-Tle. Polyol A, 25 Gew.-Tle. Ethylenglykol, 5 Gew.-Tle. der Rußpaste gemäß Beispiel 1, 0,6 Gew.-Tle. Triethylendiamin, 0,05 Gew.-Tle. Dibutylzinndilaurat, 5 Gew.-Tle. Trichlorfluormethan, 1 Gew.-Tl. der Polymerisatdispersion 1 sowie 1 Gew.-Tl. Zinkstearat werden zu einer Polyolkomponente vermischt.

Als Polyisocyanat-Komponente dient ein Gemisch mit einem NCO-Gehalt von 24,5 % und einer Viskosität bei 25°C von 300 mPa.s aus a) 75 Teilen des modifizierten Polyisocyanats gemäß Beispiel 1 und b) 25 Teilen eines teilweise carbodiimidisierten 4,4'-Diisocyanatodiphenyl-methans (NCO-Gehalt = 30 %).

Die Polyolkomponente und die Polyisocyanat-Komponente werden unter Einhaltung eines Gewichtsverhältnisses von 123 : 100 (NCO-Kennzahl = 105) bei der Herstellung von massiven Formteilen zur Umsetzung gebracht. Hierzu werden die Komponenten unter Verwendung einer Hochdruckkolbendosiermaschine (HK 165 der Firma Hennecke, Sankt Augustin), die mit einem Zweikomponenten-Mischkopf ausgerüstet war, miteinander vermischt und das Reaktionsgemisch in eine geschlossene Aluminiumform der Abmessung 120 x 20 x 0,4 cm eingefüllt. Die Forminnenwände wurden vorab mit einem handelsüblichen Trennmittel (Fluoricon ® 36/38 der Firma Acmos) beschichtet.

**Maschinendaten**

| | |
|---|---|
| Einfüllzeit: | 1,5 Sekunden |
| Rohstofftemperatur: | 35°C |
| Formtemperatur: | 60°C |
| Formstandzeit: | 90 Sekunden. |

Die der Form entnommen Platten wiesen eine einwandfreie glatte schwarze Oberfläche auf und besaßen die folgenden mechansichen Eigenschaften:

| | |
|---|---|
| Dichte (kg/m$^3$) | 1020 |
| Härte (Shore D) | 62 |
| Zugfestigkeit (MPa) | 28 |
| Dehnung (%) | 225 |
| G-Modul (MPa): | |
| -30°C | 425 |
| +20°C | 180 |
| +65°C | 80 |
| Biegemodul (MPa) | 480 |
| Sag-Wert (mm; 1h, 120°C) | 8 |

**Patentansprüche**

1. Verfahren zur Herstellung von gegebenenfalls zellförmigen Formkörpern auf Polyurethan- und/oder Polyharnstoff-Basis mit einer geschlossenen Oberfläche durch Umsetzung in einer geschlossenen Form eines Reaktionsgemisches aus

a) mindestens einem organischen Polyisocyanat,

b) mindestens einer Verbindung mit einem Molekulargewicht zwischen 400 und 12000, welche mindestens zwei gegenüber Isocyanatgruppen reaktionsfähige Gruppen aufweist und die frei von durch radikalische Polymerisation hergestellten Polymerisaten und Copolymerisaten ist,

c) gegebenenfalls mindestens einer Verbindung mit einem Molekulargewicht zwischen 32 und 399 mit mindestens zwei gegenüber Isocyanatgruppen reaktionsfähigen Gruppen, und

d) gegebenenfalls den in der Polyurethanchemie an sich bekannten Hilfs- und Zusatzstoffen,
dadurch gekennzeichnet, daß man dem Reaktionsgemisch vor der Umsetzung oberflächenverbessernde Zusatzmittel e), bestehend aus

e1) einer flüssigen und sedimentationsstabilen Polymerisatdispersion, die durch radikalische Polymerisation oder Copolymerisation von $C_1$-$C_{18}$-Alkylestern der Acrylsäure und/oder Methacrylsäure in Kombination mit bis zu 50 Gew.-%, bezogen auf das gesamte Monomerengemisch, eines oder mehrerer olefinisch ungesättigter Monomerer in einer Verbindung entsprechend Komponenten b) erhalten wird,
und

e2) mindestens einem Salz eines Metalls der 1.-3. Hauptgruppe oder der 2. Nebengruppe des Periodensystems der Elemente und einer Monocarbonsäure mit mindestens 8 Kohlenstoffatomen, einverleibt,
wobei die Zusatzmittel e) in solchen Mengen zugefügt werden, daß pro 100 Gew.-Teile der Komponenten b) 0,01 bis 1,5 Gew.-Teile an Polymerisatfeststoff aus der Polymerisatdispersion e1) und 0,01 bis 2 Gew.-Teile an Metallsalzen e2) im Reaktionsgemisch enthalten sind.

2. Verfahren nach Anspruch 1, dadurch gekennzeichnet, daß man als Komponente a) ein bei Raumtemperatur flüssiges, gegebenenfalls carbodiimid-, uretonimin- oder urethanmodifiziertes Polyisocyanat oder Polyisocyanatgemisch der Diphenylmethanreihe verwendet.

3. Verfahren nach Anspruch 1 oder 2, dadurch gekennzeichnet, daß man als Komponente b) mindestens ein di- oder trifunktionelles Polyetherpolyol mit einem Molekulargewicht von 1000 bis 7000 verwendet.

4. Verfahren nach Ansprüchen 1-3, dadurch gekennzeichnet, daß man als Komponente c)
(i) mindestens ein aromatisches Diamin, welches in ortho-Stellung zu einer ersten Aminogruppe mindestens einen Alkylsubstituenten mit 1 bis 3 Kohlenstoffatomen und in beiden ortho-Stellungen zur zweiten Aminogruppe Alkylsubstituenten mit 1 bis 3 Kohlenstoffatomen aufweist, und/oder
(ii) aliphatische Diole mit einem Molekulargewicht von 62 bis 200 in einer Gesamtmenge von 10 bis 40 Gew.-%, bezogen auf die Komponente b), verwendet.

5. Verfahren nach Ansprüchen 1-4, dadurch gekennzeichnet, daß man die Umsetzung in Gegenwart eines organischen Treibmittels durchführt.

6. Verfahren nach Ansprüchen 1-5, dadurch gekennzeichnet, daß man als Komponente e1) eine Polymerisatdispersion einsetzt, die durch radikalische Polymerisation oder Copolymerisation einer Kombination von 50-100 Gew.-Teilen mindestens eines $C_{1-10}$-Alkylesters der Acryloder Methacrylsäure und 0-50 Gew.-Teilen mindestens eines weiteren olefinisch ungesättigten und gegenüber Isocyanatgruppen inerten Monomeren in einem di- oder trifunktionellen Polyetherpolyol mit einem Molekulargewicht von 1000 - 7000 erhalten wurde.

7. Verfahren nach Anspruch 6, dadurch gekennzeichnet, daß man als weitere olefinisch ungesättigte Monomere Ethylen, Propylen, höhere $\alpha$-Olefine mit bis zu 18 C-Atomen, Styrol, Itaconsäureester, Maleinsäureester, Diallylphthalat, Vinylacetat, Acrylnitril oder Methacrylnitril verwendet.

8. Verfahren nach Ansprüchen 1-7, dadurch gekennzeichnet, daß man als Initiatoren zur Herstellung der als Komponente e1) dienenden Polymerisatdispersionen organische Peroxide oder aliphatische Azoverbindungen, z. B. Percarbonate, Perester wie tert.-Butylperpivalat oder -peroctoat, Benzoylperoxid, o-Methoxybenzoylperoxid, Dichlorbenzoylperoxid, Lauroylperoxid oder Azoisobutyronitril in Mengen von 0,1-3,0 Gew.-%, bezogen auf die Monomeren, einsetzt und die Polymerisation bei Temperaturen von 40-180°C, bevorzugt von 40-120°C, besonders bevorzugt von 40-100°C, durchführt.

9. Verfahren nach Ansprüchen 1-8, dadurch gekennzeichnet, daß man als Komponente e2) ein Zinksalz verwendet.

10. Verfahren nach Ansprüchen 1 bis 9, dadurch gekennzeichnet, daß man die Reaktionspartner nach einem Einstufen-Verfahren durch Vermischen der Komponente a) mit der Komponente b) oder mit einem Gemisch aus den Komponenten b) und c) unter Einhaltung einer NCO-Kennzahl von 70 bis 130 zur Reaktion bringt, wobei man die Komponenten d) und e) vorab einer oder beiden Reaktionskomponenten zumischt.

## Claims

1. Process for the production of optionally cellular moulded articles with a closed surface based on polyurethanes and/or polyureas by the reaction inside a closed mould of a reaction mixture of

a) at least one organic polyisocyanate,

b) at least one compound having a molecular weight of from 400 to 12,000 which contains at least two isocyanate reactive groups and is free from polymers and copolymers prepared by radical polymerisation,

c) optionally one or more than one compound in the molecular weight range of from 32 to 399 containing at least two isocyanate reactive groups and

d) optionally the known auxiliary agents and additives used in polyurethane chemistry,
characterised in that surface improving additives e) consisting of

e1) a polymer dispersion which is liquid and resistant to sedimentation and has been obtained by radical polymerisation or copolymerisation of $C_1$-$C_{18}$-alkyl esters of acrylic acid and/or methacrylic acid in combination with up to 50 % by weight, based on the total monomer mixture, of one or more olefinically unsaturated monomers in a compound corresponding to component b) and

e2) at least one salt of a metal of the 1st to 3rd Main Groups or of the 2nd sub-Group of the Periodic System of Elements and of a monocarboxylic acid having at least 8 carbon atoms

are incorporated with the reaction mixture before the reaction,

the additives e) being added in such quantities that the reaction mixture contains from 0.01 to 1.5 parts by weight of polymer solids content from the polymer dispersion e1) and from 0.01 to 2 parts by weight of metal salts e2) per 100 parts by weight of component b).

2. Process according to claim 1, characterised in that the substance used as component a) is a polyisocyanate or polyisocyanate mixture of the diphenylmethane series which is optionally modified with carbodiimide, uretoneimine or urethane groups and is liquid at room temperature.

3. Process according to claim 1 or claim 2, characterised in that at least one difunctional or trifunctional polyether polyol having a molecular weight of from 1000 to 7000 is used as component b).

4. Process according to claims 1 to 3, characterised in that

(i) at least one aromatic diamine which has at least one alkyl substituent with 1 to 3 carbon atoms in the ortho-position to a first amino group and alkyl substituents with 1 to 3 carbon atoms in both ortho-positions to the second amino group

and/or

(ii) aliphatic diols having a molecular weight of from 62 to 200

are used as component c) in a total quantity of from 10 to 40 % by weight, based on component b).

5. Process according to claims 1 to 4, characterised in that the reaction is carried out in the presence of an organic blowing agent.

6. Process according to claims 1 to 5, characterised in that the polymer dispersion used as component e1) is one which has been obtained by radical polymerisation or copolymerisation of a combination of from 50 to 100 parts by weight of at least one $C_{1-10}$-alkyl ester of acrylic or methacrylic acid and from 0 to 50 parts by weight of at least one other monomer which is olefinically unsaturated and isocyanate inert in a difunctional or trifunctional polyether polyol having a molecular weight of from 1000 to 7000.

7. Process according to claim 6, characterised in that the additional olefinically unsaturated monomers used are ethylene, propylene, higher $\alpha$-olefines with up to 18 carbon atoms, styrene, itaconic acid esters, maleic acid esters, diallylphthalate, vinyl acetate, acrylonitrile or methacrylonitrile.

8. Process according to claims 1 to 7, characterised in that the initiators for the preparation of the polymer dispersions used as component e1) are organic peroxides or aliphatic azo compounds, e.g. percarbonates, peresters such as tert.-butylperpivalate or -peroctoate, benzoyl peroxide, o-methoxybenzoylperoxide, dichlorobenzoylperoxide, lauroyl peroxide or azoisobutyronitrile, used in quantities of from 0.1 to 3.0 % by weight, based on the monomers, and polymerisation is carried out at temperatures from 40 to 180°C, preferably from 40 to 120°C, most preferably from 40 to 100°C.

9. Process according to claims 1 to 8, characterised in that a zinc salt is used as component e2).

10. Process according to claims 1 to 9, characterised in that the components are reacted together by a one-shot process by mixing component a) with component b) or with a mixture of components b) and c) in proportions maintaining an isocyanate index of from 70 to 130, components d) and e) being previously mixed with one or both reactants.

## Revendications

1. Procédé de production de pièces moulées éventuellement cellulaires à base de polyuréthanne et/ou de polyurée présentant une surface fermée, par réaction, en moule fermé, d'un mélange réactionnel constitué

a) d'au moins un polyisocyanate organique,

b) d'au moins un composé de poids moléculaire compris entre 400 et 12 000, qui présente au moins deux groupes aptes à réagir vis-à-vis de groupes isocyanato et qui est dépourvu de polymérisats et de copolymérisats produits par polymérisation radicalaire,

c) le cas échéant, d'au moins un composé de poids moléculaire compris entre 32 et 399, présentant au moins deux groupes aptes à réagir vis-à-vis de groupes isocyanato, et

d) le cas échéant, des adjuvants et additifs connus dans la chimie des polyuréthannes,

caractérisé en ce qu'on incorpore dans le mélange réactionnel avant la réaction des additifs e) améliorant la surface, constitués

e1) d'une dispersion de polymérisat liquide et stable à la sédimentation, qui est obtenue par polymérisation ou copolymérisation radicalaire d'esters d'alkyle en $C_1$ à $C_{18}$ d'acide acrylique et/ou d'acide méthacrylique en association avec jusqu'à 50 % en poids, par rapport au mélange total de monomères, d'un ou plusieurs monomères à nonsaturation oléfinique dans un composé correspondant au composant b),

e2) d'au moins un sel d'un métal du premier au troisième groupe principal ou du second sous-groupe du Système Périodique des Eléments et d'un acide monocarboxylique ayant au moins 8 atomes de carbone,

les additifs e) étant ajoutés en quantités telles qu'il y ait, pour 100 parties en poids des composants b), 0,01 à 1,5 partie en poids de matière solide polymérique de la dispersion de polymérisat e1) et 0,01 à 2 parties en poids de sels métalliques e2) dans le mélange réactionnel.

2. Procédé suivant la revendication 1, caractérisé en ce qu'on utilise comme composant a) un polyisocyanate liquide à la température ambiante, éventuellement modifié par un carbodiimide, une urétone-imine ou un uréthanne ou un mélange de tels polyisocyanates de la série du diphénylméthane.

3. Procédé suivant la revendication 1 ou 2, caractérisé en ce qu'on utilise comme composant b) au moins un polyétherpolyol difonctionnel ou trifonctionnel ayant un poids moléculaire de 1000 à 7000.

4. Procédé suivant les revendications 1 à 3, caractérisé en ce qu'on utilise comme composant c)

(i) au moins une diamine aromatique qui présente, en position ortho par rapport a un premier groupe amino, au moins un substituant alkyle de 1 à 3 atomes de carbone et, dans les deux positions ortho par rapport au second groupe amino, des substituants alkyle de 1 à 3 atomes de carbone, et/ou

(ii) des diols aliphatiques ayant un poids moléculaire de 62 à 200 en une quantité totale de 10 à 40 % en poids par rapport au composé b).

5. Procédé suivant les revendications 1 à 4, caractérisé en ce qu'on conduit la réaction en présence d'un agent porogène organique.

6. Procédé suivant les revendications 1 à 5, caractérisé en ce qu'on utilise comme composant e1) une dispersion de polymérisat qui a été obtenue par polymérisation ou copolymérisation radicalaire d'un mélange de 50 à 100 parties en poids d'au moins un ester d'alkyle en $C_1$ à $C_{10}$ d acide acrylique ou d'acide méthacrylique et 0 à 50 parties en poids d'au moins un autre monomère à non-saturation oléfinique et inerte vis-à-vis de groupes isocyanato, dans un polyétherpolyol difonctionnel ou trifonctionnel ayant un poids moléculaire de 1000 à 7000.

7. Procédé suivant la revendication 6, caractérisé en ce qu'on utilise comme autres monomères à non-saturation oléfinique l'éthylène, le propylène, des $\alpha$-oléfines supérieures ayant jusqu'à 18 atomes de carbone, le styrène, un ester d'acide itaconique, un ester d'acide maléique, le phatalate de diallyle, l'acétate de vinyle, l'acrylonitrile ou le méthacrylonitrile.

8. Procédé suivant les revendications 1 à 7, caractérisé en ce qu'on utilise, comme initiateurs pour l'obtention des dispersions de polymérisats servant de composant e1), des peroxydes organiques ou des composés azoïques aliphatiques, par exemple des percarbonates, des peresters tels que le perpivalate ou le peroctoate de tertio-butyle, le peroxyde de benzoyle, le peroxyde de o-méthoxybenzoyle, le peroxyde de dichlorobenzoyle, le peroxyde de lauroyle ou l'azo-isobutyronitrile en quantités de 0,1 à 3,0 % en poids par rapport aux monomères et on conduit la polymérisation à des températures de 40 à 180°C, de préférence de 40 à 120°C, notamment de 40 à 100°C.

9. Procédé suivant les revendications 1 à 8, caractérisé en ce qu'on utilise comme composant e2) un sel de zinc.

10. Procédé suivant les revendications 1 à 9, caractérisé en ce qu'on fait réagir les partenaires réactionnels par un procédé à une seule étape par mélange du composant a) avec le composant b) ou avec un mélange des composants b) et c) en maintenant un indice de NCO de 70 à 130, et on mélange alors préalablement les composants d) et e) avec l'un des deux composants réactionnels ou avec les deux.